(19) Europäisches Patentamt
European Patent Office
Office européen des brevets

(11) Veröffentlichungsnummer: **0 265 856 A1**

# (12) EUROPÄISCHE PATENTANMELDUNG

(21) Anmeldenummer: **87115539.6**

(22) Anmeldetag: **23.10.87**

(51) Int. Cl.⁴: **C04B 40/06**, C04B 28/10, C04B 2/06

(30) Priorität: **28.10.86 DE 3636615**

(43) Veröffentlichungstag der Anmeldung:
**04.05.88 Patentblatt 88/18**

(84) Benannte Vertragsstaaten:
**AT CH DE LI NL**

(71) Anmelder: **Rohstoffbetriebe Oker GmbH & Co.**
**Harlingeröder Landstrasse**
**D-3380 Goslar(DE)**

(72) Erfinder: **Leibeke, Erich**
**Mellendorfer Kirchweg 9**
**D-3002 Wedemark 1 Hellendorf(DE)**
Erfinder: **Sievers, Walter**
**Harlingeröder Strasse 15**
**D-3387 Vienenburg 2(DE)**
Erfinder: **Spindler, Kurt**
**Kleinertstrasse 32**
**D-3000 Hannover 61(DE)**

(74) Vertreter: **Lins, Edgar, Dipl.-Phys. et al**
**Patentanwälte Gramm + Lins**
**Theodor-Heuss-Strasse 2**
**D-3300 Braunschweig(DE)**

## (54) Verfahren zur Herstellung von Trockenmörtel bzw. Vormörtel.

(57) Bei einem Verfahren zur Herstellung eines Trockenmörtels bzw. Vormörtels aus Kalkhydrat und einem Zuschlag sowie ggf. einem weiteren Bindemittel und Zusatzstoffen und Zusatzmitteln unter Verwendung eines erd- oder waschfeuchten Zuschlags läßt sich die für die erforderliche Trocknung des Zuschlags benötigte Energiemenge durch folgende Verfahrensschritte einsparen:

-Die Feuchtigkeit des Zuschlags wird festgestellt

-zur Trocknung des Zuschlags wird Baukalk als gebrannter, ungelöschter Kalk in gemahlener Form (Feinkalk) zugesetzt

-die Höhe der für die chemische Umwandlung des Feinkalkes zu Kalkhydrat erforderliche Wassermenge wird berechnet und unter Abzug des in dem Zuschlag vorhandenen Wassers ggf. zugefügt

-zur Abwicklung und Beendigung des Ablöschvorganges wird das Mischprodukt einer Mörtelliegezeit unterworfen.

Der auf diese Weise hergestellte Trockenmörtel bzw. Vormörtel zeigt keine Tendenz zur Entmischung von Zuschlag und Kalkhydrat.

EP 0 265 856 A1

## Verfahren zur Herstellung von Trockenmörtel bzw. Vormörtel

Die Erfindung betrifft ein Verfahren zur Herstellung eines Trockenmörtels bzw. Vormörtels aus Kalkhydrat und einem Zuschlag sowie ggf. einem weiteren Bindemittel uno Zusatzstoffen und Zusatzmitteln unter Verwendung eines erd-oder waschfeuchten Zuschlags.

Um einen lagerfähigen Vormörtel bzw. einen mit den Bindemitteln und ggf. Zusatzstoffen lagerfähigen Trockenmörtel zu erhalten, muß dieser fließfähig und trocken sein. Feuchte Zuschläge, wie sie im allgemeinen in Gruben oder Naßbaggereien gefördert werden, müssen daher in bekannter Technik mit Kohle, Gas, Öl oder Strom beheizten Trocknern getrocknet werden. Danach werden den getrockneten Zuschlägen die zür Herstellung eines Mauer-bzw. Putzmörtels notwendigen Bindemittel, Baukalk als Kalkhydrat und Gips oder Zement, sowie evtl. notwendige oder gewünschte Zusatzstoffe und Zusatzmittel beigemischt. Dabei ist es wichtig, daß die durch das unterschiedliche Fließverhalten und Rohdichten der beteiligten Stoffe auftretende Entmischung verhindert wird.

Das bekannte Verfahren ist aufwendig und benötigt einen erheblichen Energieaufwand. Die mechanische Entmischung läßt sich nicht zuverlässig vermeiden.

Der Erfindung liegt demgegenüber die Aufgabe zugrunde, ein Verfahren der eingangs erwähnten Art anzugeben, durch das die Herstellung eines trockenen, nicht zur Entmischung neigenden Vormörtels bzw. Trockenmörtels ohne großen Energieaufwand möglich ist.

Diese Aufgabe wird erfindungsgemäß durch folgende Verfahrensschritte gelöst:

-Die Feuchtigkeit des Zuschlags wird festgestellt

-zur Trocknung des Zuschlags wird Baukalk als gebrannter, ungelöschter Kalk in gemahlener Form (Feinkalk) zugesetzt

-die Höhe der für die chemische Umwandlung des Feinkalkes zu Kalkhydrat erforderliche Wassermenge wird berechnet und unter Abzug des in dem Zuschlag vorhandenen Wassers ggf. zugefügt

-zur Abwicklung und Beendigung des Ablöschvorganges wird das Mischprodukt einer Mörtelliegezeit unterworfen.

Bei dem erfindungsgemäßen Verfahren wird die Trocknung des feuchten Zuschlags auf eine völlig andere Weise als bisher durchgeführt. Dem feuchten Zuschlag, der typischer Weise beispielsweise etwa 3 % Feuchte enthält, wird gebrannter, ungelöschter Kalk in Form von Feinkalk in der Menge zugesetzt, wie sie zur Herstellung eines normgerechten Vor-oder Trockenmörtels erforderlich ist. Mit dem Wasser aus dem Zuschlag und der ggf. zusätzlich zugegebenen Wassermenge bildet der gebrannte Kalk das Kalkhydrat, das in den bisher bekannten Verfahren dem Zuschlag in fabrikmäßig hergestellter fertiger Form zugemischt wurde. Bei dem erfindungsgemäßen Verfahren wird das Kalkhydrat somit erst durch Zumischen von gebranntem Kalk nach folgender Reaktionsgleichung gebildet:

| | | | |
|---|---|---|---|
| $CaO$ | + | $H_2O$ | $Ca(OH)_2$ - 1204 KJ/kg bei 100°C/1013 mbar |
| 56,079 g/mol | | 18,015 g/mol | 74,094 g/mol |

Das zugeführte Wasser wird dabei zum einen chemisch gebunden und zum anderen durch die bei der chemischen Umwandlung freigesetzte Wassermenge verdampft. Durch die kontrollierte Menge des beteiligten Wassers (aus der Feuchtigkeit des Zuschlags und ggf. dem zugesetzten Wasser) wird sichergestellt, daß der gebrannte Kalk vollständig zu Kalkhydrat umgesetzt wird und einen die Weiterverarbeitung des Gemisches behindernde Restfeuchte nicht verbleibt. Pro Kilogramm CaO werden 0,321 kg Wasser chemisch gebunden. Durch die Reaktionswärme wird nahezu die gleiche Wassermenge verdampft. Danach errechnet sich für den Entzug von 1 kg Wasser die Zugabe von 1,5 kg Feinkalk. Sind beispielsweise 5 % Wasser im Zuschlag enthalten, ergibt sich daraus der Einsatz von 75 kg Feinkalk für die Trocknung von 1000 kg Zuschlag. Diese Menge liegt zugleich im Bereich der Menge, die zur Herstellung eines normgerechten Vormörtels benötigt wird. Mit abnehmender Feuchte ergibt sich ggf. eine zur Herstellung des Vormörtels zwar notwendige, aber für die Trocknung des Zuschlages nicht erforderliche, daher überschüssige Kalkmenge, die wie oben beschrieben zur Ablöschung und Umsetzung zu Kalkhydrat der Zuführung einer zusätzlichen Wassermenge bedarf.

Die von der Reaktivität des Kalkes abhängende Verweilzeit der Mischung des Zuschlags mit dem gebrannten Kalk, vorzugsweise in einem Reaktionsbehälter, stellt sicher, daß der gebrannte Kalk vollständig in Kalkhydrat umgesetzt und die vorgegebene Wassermenge verdampft wird.

In der Praxis hat sich gezeigt, daß neben der Ausnutzung der Hydratationswärme für die Trocknung der überraschende Effekt erzielt wird, daß die so abgelöschten Kalkteilchen stark am Zuschlag haften und die früher bei der Mischung von Kalkhydrat und trockenen Zuschlag beobachtete Entmischung des Produktes nicht mehr auftritt.

Der so hergestellte Vormörtel kann problemlos gelagert, transportiert und zu einem höherwertigen Mörtel verarbeitet werden, z.B. unter Zugabe weiterer Bindemittel (Zement, Kalk, Gips usw.) und ggf. Zusatzstoffe und Zusatzmittel zu Werktrockenmörtel und unter weiterer Wasserzugabe zu Frischmörtel.

Die Mischung des Feinkalkes mit dem feuchten Zuschlag wird in bekannter Technik durch kontinuierliche oder diskontinuierliche Zusammenführung der Stoffe und einem gleichzeitigen Mischprozeß vorgenommen, wobei die chemische Umwandlung des Kalkes unter Abgabe von Wärme eingeleitet wird.

## Ansprüche

Verfahren zur Herstellung eines Trockenmörtels bzw. Vormörtels aus Kalkhydrat und einem Zuschlag sowie ggf. einem weiteren Bindemittel und Zusatzstoffen und Zusatzmitteln unter Verwendung eines erd- oder waschfeuchten Zuschlags, **gekennzeichnet** durch folgende Verfahrensschritte:

-Die Feuchtigkeit des Zuschlags wird festgestellt

-zur Trocknung des Zuschlags wird Baukalk als gebrannter, ungelöschter Kalk in gemahlener Form (Feinkalk) zugesetzt

-die Höhe der für die chemische Umwandlung des Feinkalkes zu Kalhydrat erforderliche Wassermenge wird berechnet und unter Abzug des in dem Zuschlag vorhandenen Wassers ggf. zugefügt

-zur Abwicklung und Beendigung des Ablöschvorganges wird das Mischprodukt einer Mörtelliegezeit unterworfen.

Europäisches Patentamt

# EUROPÄISCHER RECHERCHENBERICHT

Nummer der Anmeldung

EP 87 11 5539

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A- 461 129 (J. JOACHIM)<br>* Seite 1, Zeilen 1-10 * | 1 | C 04 B 40/06<br>C 04 B 28/10<br>C 04 B 2/06 |
| A | US-A-2 480 020 (W. HELMS)<br>* Seite 1, Spalte 1, Zeilen 45-55 * | 1 | |
| | | | RECHERCHIERTE SACHGEBIETE (Int. Cl.4) |
| | | | C 04 B 2/00<br>C 04 B 28/00<br>C 04 B 40/00 |

Der vorliegende Recherchenbericht wurde für alle Patentansprüche erstellt

| Recherchenort | Abschlußdatum der Recherche | Prüfer |
|---|---|---|
| DEN HAAG | 11-12-1987 | DAELEMAN P.C.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)